# EUROPÄISCHE PATENTSCHRIFT

(11) **EP 4 089 296 B1**
(45) Veröffentlichungstag und Bekanntmachung des Hinweises auf die Patenterteilung: **03.07.2024**
(21) Anmeldenummer: 21173267.2
(22) Anmeldetag: 11.05.2021
(51) Int. Cl.: F16D 3/79, G01L 3/14, F16D 3/74

(54) **ELASTISCHE WELLENKUPPLUNG UND KUPPLUNGSMEMBRAN FÜR EINE SOLCHE**
FLEXIBLE SHAFT COUPLING AND COUPLING MEMBRANE FOR SUCH A COUPLING
ACCOUPLEMENT D'ARBRE ÉLASTIQUE ET MEMBRANE D'ACCOUPLEMENT POUR UN TEL ACCOUPLEMENT

(43) Veröffentlichungstag der Anmeldung: 16.11.2022
(73) Patentinhaber: Centa-Antriebe Kirschey GmbH, 42781 Haan (DE)
(72) Erfinder: HASAN, Mahamudul, 44803 Bochum (DE); BACH, Martin, 42781 Haan (DE)
(74) Vertreter: V.O.

(56) Entgegenhaltungen:
- EP-A2- 1 394 431
- EP-A2- 2 166 243
- WO-A2-2005/062719
- DE-A1-102016 012 324
- GB-A- 2 511 101
- JP-A- 2001 304 985
- JP-A- 2005 084 000
- US-A1- 2015 114 787

## Beschreibung

Vorliegende Erfindung betrifft eine Kupplungsmembran für eine elastische Wellenkupplung zur achs- und/oder winkelversatzkompensierenden und drehmomentübertragenden Kopplung eines Antriebsmittels, umfassend beispielsweise eine Antriebswelle, mit einem entlang einer Rotationsachse A_{R} nachgeschaltetem Abtriebsmittel, umfassend beispielsweise eine Abtriebswelle, wobei die Kupplungsmembran um die Rotationsachse A_{R} rotierend drehmomentübertragend mit dem Antriebsmittel und/oder dem Abtriebsmittel verbindbar ist. Darüber hinaus umfasst die Erfindung eine elastische Wellenkupplung, umfassend eine solche Kupplungsmembran.

Derartige Wellenkupplungen und Kupplungsmembranen für Wellenkupplungen sind aus dem Stand der Technik bekannt. Sie dienen u. a. dem Ausgleich von Achsversatz und Winkelversatz zwischen zwei Einheiten, wie zuvor beschrieben, beispielsweise einem Antriebsmittel und einem Abtriebsmittel. Ein solcher Versatz kann beispielsweise durch Ausrichtungsfehler der beiden Einheiten in Axialrichtung und/oder orthogonal dazu, als auch in einer zueinander verschwenkten Richtung gegeben sein. Oft resultiert ein solcher Versatz aus Montageungenauigkeiten.

Da solche Wellenkupplungen und deren Membranen oft hohen Belastungen ausgesetzt sind, ist es wichtig, Rückschlüsse auf die Belastungen an diesen Bauteilen ziehen zu können. Unterschiedliche Verfahren und insbesondere die Verwendung von Sensormitteln an den Antriebs- und Abtriebsmitteln, insbesondere deren Wellen, sind bekannt. Solche Sensormittel sind beispielsweise optische Sensoren, Sollbruchkomponenten, Dehnungsmesstreifen bzw. entsprechende Mittel zu deren Anordnung. Die Sensoren erlauben direkt oder indirekt eine Detektion der anliegenden Drehmomente.

Bekannt ist u.a. die Ausbildung des Sensormittels mit Dehnungsmessstreifen, die auf den Abtriebs- bzw. Antriebsmitteln, insbesondere auf deren Wellen angeordnet werden. Über die auftretenden Dehnungen können die anliegenden Spannungen und insbesondere Drehmomente ermittelt werden.

Es hat sich jedoch herausgestellt, dass die daraus gewonnenen Ergebnisse oft ungenau und insbesondere durch eine Kombination und Beeinflussung von Achs- und Winkelversatz verfälscht werden. So kann ein Winkelversatz Biegemomente in die Messeinrichtungen eintragen, die dann fälschlicherweise als Drehmomente interpretiert werden und umgekehrt.

Die Druckschriften WO 2005/062719 A2, JP 2001 304985 A, JP 2005 084000 A und DE 10 2016 012324 A1, Kupplungsmembranen die mit Sensoren versehen sind.

Aufgabe der Erfindung ist es folglich, eine Einrichtung anzubieten, die eine zuverlässige drehmomentenübertragende aber auch achs- und/oder winkelversatzkompensierende Kopplung zwischen einem Antriebsmittel und einem Abtriebsmittel erlaubt, und bei der eine genaue Detektion der anliegenden Spannungen und insbesondere der Drehmomente möglich ist. Diese Lösung soll zudem kostengünstig, leicht montierbar und, insbesondere bei Defekten, einfach austauschbar sein.

Diese Aufgaben werden durch eine Kupplungsmembran und eine elastische Wellenkupplung gemäß den unabhängigen Ansprüchen gelöst.

Insbesondere wird diese Aufgabe gelöst durch eine Kupplungsmembran für eine elastische Wellenkupplung, zur achs- und/oder winkelversatzkompensierenden und drehmomentübertragenden Kopplung eines Antriebsmittels, umfassend beispielsweise eine Antriebswelle, mit einem entlang einer Rotationsachse AR nachgeschaltetem Abtriebsmittel, umfassend beispielsweise eine Abtriebswelle,
wobei die Kupplungsmembran um die Rotationsachse rotierend drehmomentübertragend mit dem Antriebsmittel und/oder dem Abtriebsmittel verbindbar ist, wobei die Kupplungsmembran eine Mehrzahl in Umfangsrichtung verteilter Durchbrechungen aufweist, die durch resultierende radial verlaufende Stege voneinander getrennt sind, wobei die Durchbrechungen in, in Radialrichtung verlaufenden Durchbrechungssektoren, und die Stege in, in Radialrichtung verlaufenden Stegsektoren in der Kupplungsmembran ausgebildet sind, weiter umfassend eine Mehrzahl an Sensormitteln zur Drehmomentenmessung, um eine Dehnungs- und/oder Spannungsmessung an der Kupplungsmembran derart auszuführen, dass daraus ein Rückschluss auf ein an der Wellenkupplung anliegendes Drehmoment möglich ist, wobei diese Mehrzahl der Sensormittel in den Durchbrechungssektoren auf der Kupplungsmembran angeordnet ist.

Darüber hinaus wird diese Aufgabe gelöst durch eine elastische Wellenkupplung Wellenkupplung zur achs- und/oder winkelversatzkompensierenden und drehmomentübertragenden Kopplung eines Antriebsmittels, mit beispielsweise einer Antriebswelle, mit einem entlang einer Rotationsachse nachgeschaltetem Abtriebsmittel, mit beispielsweise einer Abtriebswelle, umfassend wenigstens zwei sich wenigstens teilweise gegenüberliegende erste und zweite Kupplungsmembranen, die über ein insbesondere elastisches Ausgleichsmittel miteinander in drehmomentübertragender Kraftkopplung stehen, wobei die erste Kupplungsmembran drehmomentübertragend mit dem Antriebsmittel und die zweite Kupplungsmembran drehmomentübertragend mit dem Abtriebsmittel verbindbar ist, oder umgekehrt, wobei wenigstens eine Kupplungsmembran eine Kupplungsmembran nach einem der vorhergehenden Ansprüche ist.

Unter einem Sektor wird im Umfang der Erfindung ein insbesondere Kreissektor mit einer Teilfläche einer im Wesentlichen kreisförmigen Fläche verstanden, die von einem Kreisbogen und zwei Kreisradien begrenzt wird. Üblicherweise sieht ein solcher Kreissektor von oben betrachtet aus wie ein Tortenstück. Es sei jedoch angemerkt, dass unter dem Begriff Kreissektor bzw. Sektor auch eine Teilfläche verstanden wird, die als äußere Begrenzung keinen Kreisbogen, sondern einen anderweitig geformte, stetig, nicht stetig oder frei gebogene oder abgewinkelte Erstreckung aufweist. Ein solcher Sektor kann also beispielsweise auch in einer rechteckigen, mehreckigen, gezackten oder dergleichen "Tortenstückform" ausgebildet sein. Ähnliches gilt für den Begriff Kreisradius, da hier auch Seitenbegrenzungen des Sektors mit umfasst sind, die nicht vollständig in Radialrichtung, sondern optional davon abweichend, stetig, nicht stetig oder frei gebogene oder abgewinkelte Erstreckung aufweisen. Die Erstreckung der Summe an Kreisbögen definiert üblicherweise die Geometrie der Kupplungsmembran von oben, also koaxial zur Rotationsachse, um die die Kupplungsmembran rotiert, betrachtet, insbesondere in ihrer Erstreckungsebene E.

Die Durchbrechungssektoren und Stege sind optional dadurch gekennzeichnet, dass sie im Übergangsbereich zwischen Steg und Durchbrechung radial verlaufende gemeinsame Grenzen ausweisen, die die Seitengrenzen der jeweiligen Sektoren definieren. Radial verlaufend kann "auf dem kürzesten Wege" bedeuten, es kann aber auch entlang einer Haupterstreckungsrichtung bedeuten, von der beispielsweise wenigstens abschnittsweise, insbesondere mäandernd, geschlängelt, gebogen, im Zickzack etc., abgewichen wird. Der Außenrand der Kupplungsmembran, insbesondere verlaufend in Umfangsrichtung der Kupplungsmembran, bildet optional den jeweiligen Sektorabschluss. Optional bildet der Mittelpunktsbereich der Kupplungsmembran und insbesondere ein Bereich in dem die Rotationsachse A_{R} verläuft, das Sektorzentrum. Es ist auch denkbar das ein Sektor eine Teilringform ausweist. Dies ist beispielsweise der Fall, wenn die Kupplungsmembran als Ringelement ausgeführt ist. Auch dies ist hier mit umfasst.

Sensormittel können sämtliche Arten von Sensoren umfassen, die der Detektion von wenigstens einem der folgenden, nämlich Dehnung, Torsion, Stauchung, Ermüdung, oder dergleichen spannungsresultierenden Faktoren dienen. Vom Begriff Sensormittel sind auch Teilelemente umfasst. Ein Sensormittel kann so auch lediglich eine Aufnahme umfassen, in die ein Sensor eingesetzt werden kann bzw. befestigt oder angeordnet ist.

Unter Achsversatz wird im Umfang der Erfindung ein Versatz zwischen Antriebsmittel und Abtriebsmittel entlang der Rotationsachse verstanden, wie sie beispielsweise bei insbesondere freistehenden Abtriebs- bzw. Antriebsmitteln aufgrund Positionierungsungenauigkeiten oder aber Rundlaufabweichungen bzw. vergleichbaren Rotationen entstehen kann. Unter Axialversatz kann aber auch ein Versatz der jeweiligen Rotationsachsen A_{R}, verstanden werden, die dann nicht in Axialrichtung versetzt werden, sondern orthogonal dazu, also achsparallel, verlaufen. Auch hier kann ein solcher Axialversatz über die elastische Wellenkupplung kompensiert werden. Unter Winkelversatz wird dagegen ein Versatz der jeweiligen Rotationsachsen des Antriebsmittels und des Abtriebsmittels um einen Winkelversatz verstanden. Herrscht ein Winkelversatz vor, laufen die jeweiligen Rotationsachsen vom Antriebsmittel und Abtriebsmittel, also nicht koaxial, sondern in einem Versatzwinkel zueinander verschwenkt

In Bezug auf die Antriebswelle und/oder die Abtriebswelle: Hier können sämtliche Arten von Wellen verwendet werden. Optional ist die Wellenkupplung dabei über ein Verbindungsmittel und insbesondere einen Flansch oder eine Schweißverbindung mit dem Abtriebsmittel und/oder dem Antriebsmittel, bzw. einer entsprechenden Welle verbunden. Hier sind aus dem Stand der Technik vielseitige Lösungen bereits bekannt. Insbesondere die Ausbildung von Schraubflanschen, über die die Wellenkupplung bzw. die Kupplungsmembran mit dem Abtriebsmittel bzw. dem Antriebsmittel verbunden ist, erlaubt den Austausch eventuell verschlissener Bauteile. Eine solche Antriebswelle kann beispielsweise eine Motorwelle sein. Eine Abtriebswelle kann beispielsweise eine Getriebewelle sein. Anstelle der Wellen können natürlich auch alle anderen Arten von Kraft übertragenden Bauteilen und insbesondere Drehmoment übertragenden Bauteilen mit den jeweiligen Kupplungsmembranen bzw. der Wellenkupplung verbunden werden.

Die genannte Wellenkupplung kann mit wenigstens einer erfindungsgemäßen Kupplungsmembran, aber auch mit zwei oder mehreren Kupplungsmembranen ausgeführt sein, bei denen wenigstens eine die erfindungsgemäße Kupplungsmembran, insbesondere die Durchbrechungen und die weiteren Spezifikationen aufweist, wie sie hier beschrieben sind.

Erfindungsgemäß ist ein Punkt der Erfindung die Möglichkeit, an der Kupplungsmembran selbst Sensormittel anzuordnen bzw. vorzusehen. Es hat sich herausgestellt, dass die Anordnung der Sensormittel in den Durchbrechungssektoren eine zuverlässige und sehr genaue Spannungsdetektion an der Kupplungsmembran ermöglicht. Insbesondere reduzieren sich Messfehler, wohl resultierend aus einer Kombination aus winkelversatzresultierenden Spannungen und achsversatzresultierenden Spannungen, um ein Vielfaches, wenn nicht sogar vollständig.

Es ist denkbar, die Durchbrechungen in der Kupplungsmembranebene E der Kupplungsmembran auszubilden. Diese Kupplungsmembranebene E ist die Haupterstreckungsebene der Kupplungsmembran, die optional orthogonal zur Rotationsachse steht.

Es ist denkbar, die Sensormittel an der Kupplungsmembran ausschließlich in den Durchbrechungssektoren und nicht in den Stegsektoren anzuordnen. Jedoch ist es auch möglich, wenigstens ein Sensormittel als Vergleichsmittel in den Stegsektoren anzuordnen, um beispielsweise neben den Drehmomenten resultierende Dehnungen bzw. Spannungen aus fremdinduzierten Belastungen, wie sie beispielsweise aus Winkelversatz oder Achsversatz entstehen können, zu detektieren. Selbiges gilt für Sensormittel, die außerhalb der Kupplungsmembran angeordnet werden können.

Wie bereits erwähnt, weist eine Mehrzahl der Sensormittel optional an der Kupplungsmembran Aufnahmen zur Aufnahme von Sensormitteln, optional Dehnungsmessstreifen, auf. Auch ist es denkbar, dass die Kupplungsmembran Sensoren der mittel, optional Dehnungsmesstreifen selbst auf. Anstelle von Dehnungsmessstreifen können, wie bereits erwähnt, natürlich andere Arten von Sensoren verwendet werden, wie sie aus dem Stand der Technik bekannt und hier definiert sind.

Es ist denkbar, die Durchbrechungssektoren und die Stegsektoren in Umfangsrichtung U intermittierend in der Kupplungsmembran auszubilden. Optional sind die Durchbrechungssektoren jeweils in Umfangsrichtung in vorauslaufender Richtung als auch in nachlaufender Richtung von Stegsektoren eingerahmt. Es ist denkbar, die Durchbrechungssektoren und/oder die Stegsektoren in unterschiedlichen oder aber mit identischen Abmessungskomponente, insbesondere Größe und/oder Fläche und/oder radiale Erstreckung und/oder Bogenlänge und/oder auch Dicke, wobei die Dicke in einer Richtung entlang der Rotationsachse definiert ist, auszubilden. Es ist auch denkbar, dass wenigstens ein Sektor einer Gruppe der Stegsektoren und Durchbrechungssektoren eine unterschiedliche Abmessungskomponente, im Vergleich zu den anderen Sektoren aufweist. Optional sind wenigstens eine Mehrzahl, optional alle Abmessungskomponenten der Durchbrechungssektoren, insbesondere die zuvor explizit genannten, identisch. Selbiges kann für die Komponenten der Stegsektoren gelten. Optional ist insbesondere die Bogenlänge der Durchbrechungssektoren länger als die Bogenlängen des Stegsektoren. Unter Bogenlänge wir optional die Außenabmessung der jeweiligen Sektoren verstanden.

Die Durchbrechungssektoren und Stege sind optional dadurch gekennzeichnet, dass sie in einem Übergangsbereich zwischen Stegsektor und Durchbrechungssektor radial verlaufende gemeinsame Grenzen ausweisen, die die Seitengrenzen der jeweiligen Sektoren definieren. Der Außenrand der Kupplungsmembran, insbesondere verlaufend in Umfangsrichtung der Kupplungsmembran, bildet optional den jeweiligen Sektorabschluss. Optional bildet der Mittelpunktsbereich der Kupplungsmembran und insbesondere ein Bereich in dem die Rotationsachse A_{R} verläuft das Sektorzentrum. Es ist auch denkbar das ein Sektor eine Teilringform ausweist, Dies ist beispielsweise der Fall, wenn die Kupplungsmembran als Ringelement ausgeführt ist.

Es ist denkbar, dass die Durchbrechungen inselförmig in der Kupplungsmembranebene E angeordnet sind. Die Durchbrechungen können insbesondere in Radialrichtung betrachtet innen und/oder außen von einem Nichtdurchbrechungsmittel eingeschlossen sein. Ein solches Nichtdurchbrechungsmittel kann beispielsweise ein anderes Material sein, es kann eine andere Dicke haben bzw. es kann. Im Vergleich zur Durchbrechung, überhaupt eine Dicke haben. Dies ist verständlich, wenn man bedenkt, dass die Durchbrechungen entweder derart ausgebildet sind, dass sie einen Durchgang zwischen einer linksseitigen Position bezüglich der Kupplungsmembran und einer rechtsseitigen Position bezüglich der Kupplungsmembran, also beispielsweise einer Antriebsseite und einer Abtriebsseite, definieren, insbesondere ein "Loch" bilden. Es ist auch denkbar, dass die Durchbrechungen lediglich Bereiche sind, in denen die Dicke des Kupplungsmembranmaterials geringer ist als die Dicke in angrenzenden Bereichen und insbesondere in die Durchbrechungen umgebenden Bereichen. Auch ein solcher Bereich mit im Vergleich zu den Stegsektoren reduzierter Dicke, kann im Umfang der Erfindung optional als Durchbrechung bezeichnet werden.

Erfindungsgemäß ist eine Mehrzahl der Sensormittel, jeweils in einem Durchbrechungssektor, in Radialrichtung R der Kupplungsmembran betrachtet, in Bezug auf die Rotationsachse A_{R} weiter innen angeordnet ist als die Durchbrechung. Die Rotationsachse ist optional in einem Massen-Zentrum Z der Kupplungsmembran angeordnet.

Es ist denkbar, eine Mehrzahl an Sensormitteln in einem Durchbrechungssektor auszubilden. Weiter ist es denkbar, wenigstens ein Sensormittel in Bezug auf die Umfangsrichtung bzw. den Kreisbogen des Sensormittels mittig anzuordnen. Optional ist wenigstens ein solches Sensormittel direkt auf einer Winkelhalbierenden des jeweiligen Sektors angeordnet ist.

Optional ist ein Ausgleichsmittel aus einem Gummi oder dergleichen flexiblem Material an der Kupplungsmembran und, optional zwischen wenigstens zwei Kupplungsmembranen angeordnet. Es erlaubt den elastischen Ausgleich von Winkel- und/oder Achsversatz.

Es ist denkbar, dass die Kupplungsmembran insbesondere in einem bezüglich der Durchbrechungen radial innenliegenden Bereich, optional in einem Zentralbereich Z, ein Triebbefestigungsmittel, insbesondere einen Flansch, aufweist, mit dem sie am Antriebsmittel oder am Abtriebsmittel befestigbar ist und/oder in einem in Radialrichtung der Kupplungsmembran weiter außen liegenden Außenrandbereich A ein Ausgleichsbefestigungsmittel aufweist, mit dem sie an einem Ausgleichsmittel, beispielsweise einem Gummi oder dergleichen elastischen Element, befestigbar und insbesondere anvulkanisierbar ist, oder ein solches Ausgleichsmittel aufweist.

Es ist denkbar, dass eine Mehrzahl der Durchbrechungen sich in Umfangsrichtung U der Kupplungsmembran länger erstreckt als in Radialrichtung der Kupplungsmembran. Die Durchbrechungen weisen optional also eine längliche, optional gebogene Form auf. Optional ist die Seiten- bzw. Randlinie der Durchbrechung stetig ausgebildet.

Es ist weiter denkbar, dass eine Mehrzahl der Durchbrechungen in wenigstens einem in Umfangsrichtung U der Kupplungsmembran liegenden voraus- und/oder nachlaufenden Bereich eine größere Radialerstreckung aufweist als in einem in Umfangsrichtung U der Kupplungsmembran und in Bezug auf die voraus- und/oder nachlaufenden Bereiche zwischenliegenden Zwischenbereich. Optional ist es denkbar, dass die Durchbrechungen im mittleren Bereich dünner sind als im vorauslaufenden und/oder nachlaufenden Bereich. Dünner bezieht sich hier auf die Radialrichtung.

Es ist denkbar, dass eine Mehrzahl der Durchbrechungen in einer Draufsicht auf die Kupplungsmembranebene E eine Schmetterlingsform aufweist. Auch ist es denkbar, dass eine Mehrzahl der Durchbrechungen eine Bohnenform in der selbigen Draufsicht aufweist.

Es ist denkbar, dass eine Mehrzahl der Durchbrechungen in Bezug auf eine die jeweilige Durchbrechung schneidende Radialachse As der Kupplungsmembran symmetrisch ausgebildet ist.

Zudem ist es denkbar, dass eine Mehrzahl der Durchbrechungen in einem, in Radialrichtung R der Kupplungsmembran betrachtet, weiter innen liegenden Bereich, eine in Radialrichtung nach außen gebogene, optional konvexe Erstreckung, optional einen solchen Randbereich aufweist, und/oder in einem, in Radialrichtung R der Kupplungsmembran betrachtet, äußeren Bereich eine nach innen gebogene, optional konkave Erstreckung, optional einen solchen Randbereich aufweist.

Es ist denkbar, dass die Durchbrechungen über den Umfang der Kupplungsmembran gleichmäßig verteilt angeordnet sind. Insbesondere in diesem Zusammenhang ist es denkbar, dass die von den jeweils die Durchbrechung schneidenden Radialachsen As eingeschlossenen Achswinkel über den Umfang der Kupplungsmembran verteilt gleich sind.

Außerdem ist es denkbar, dass jeweils zwei Durchbrechungen sich radial gegenüberliegend angeordnet sind.

Es ist denkbar, dass die Durchbrechungen, über den Umfang verteilt, jeweils alle 45° oder alle 90° oder alle 120° oder alle 180° angeordnet sind. Diese Positionierung bezieht sich optional auf Radialmittelachsen der Durchbrechungen, und die damit gebildeten Sektorwinkel von 45 Grad bzw. 90° bzw. 120° bzw. 180°.

Wie zuvor erwähnt, betrifft vorliegende Erfindung auch eine Wellenkupplung, umfassend wenigstens eine hierin beschriebene Kupplungsmembran. Aus Redundanzgründen wird auf sämtliche Ausführungsformen dieser Wellenkupplung nicht im Detail eingegangen, sondern auf die jeweiligen Spezifikationen der Kupplungsmembran verwiesen. Was für die Kupplungsmembran gilt, soll insofern auch für die Wellenkupplung mit einer Kupplungsmembran gelten und umgekehrt.

Im Folgenden wird die Erfindung anhand von Ausführungsbeispielen beschrieben, die durch die beiliegenden Zeichnungen näher erläutert werden. Hierbei zeigen schematisch:
Figs. 1 und 2 ein System umfassend eine Ausführungsform der elastischen Wellenkupplungen in unterschiedlichen relativen Ausrichtungen;
Fig. 3 eine isometrische Darstellung einer Ausführungsform der elastischen Wellenkupplung gemäß den Figs. 1 und 2;
Fig. 4 eine Detaildarstellung der Ausführungsform gemäß Fig. 3 in der dort eingezeichneten Schnittführung;
Fig. 5 eine Draufsicht auf eine Kupplungsmembran der Ausführungsform gemäß Fig. 3;
Fig. 6 und 7 Teilschnitte durch die Ausführungsform gemäß Fig. 5 mit den dort dargestellten Schnittführungen; und
Fig. 8 eine Draufsicht auf die Ausführungsform gemäß Fig. 3 mit eingezeichneten Sektoren.

Im Folgenden werden für gleiche und gleich wirkende Bauteile dieselben Bezugsziffern verwendet, wobei bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

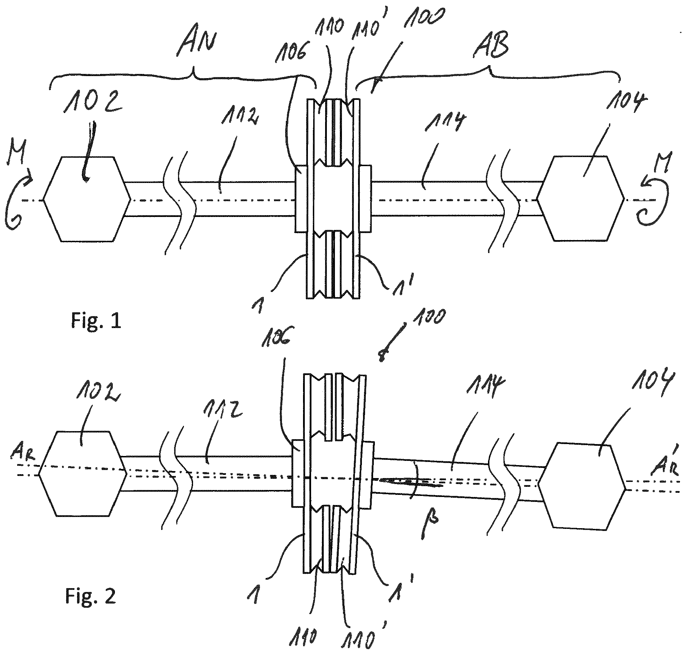

Die Figs. 1 und 2 zeigen ein System, bei dem ein Antriebsmittel (102) und ein Abtriebsmittel (104) über eine Wellenkupplung (100) miteinander verbunden sind.

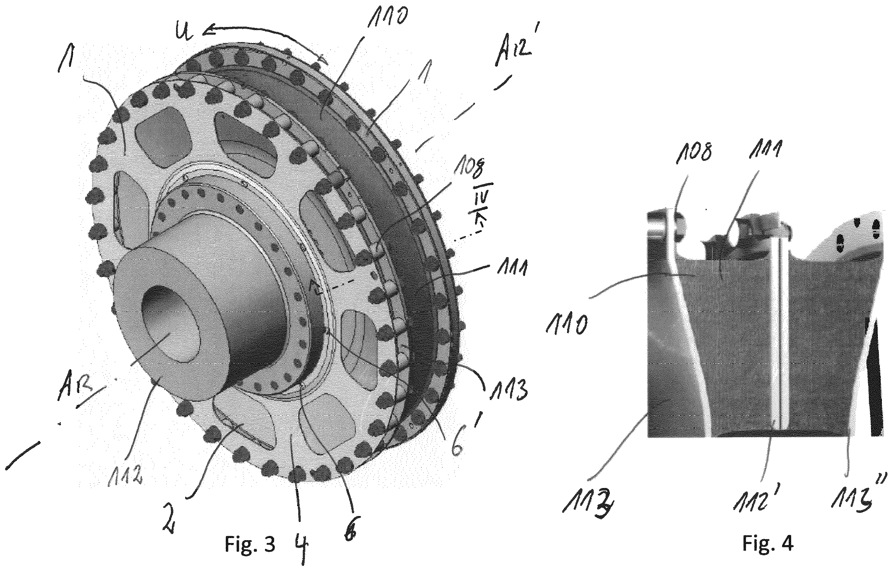

Das Antriebsmittel (102) kann beispielsweise ein Motor sein, und eine Antriebswelle (112) umfassen, die über ein Triebbefestigungsmittel (106) mit einem Teil der Wellenkupplung (100) verbunden ist. Diese Anordnung bildet exemplarisch die Antriebsseite AN. Auf der Abtriebsseite AB ist bei dieser Ausführungsform ein Abtriebsmittel (104), beispielsweise ein Getriebe, über eine Abtriebswelle (114) mit derselben Wellenkupplung (100) verbunden, wobei hier eine Festlegung ebenfalls über ein Triebbefestigungsmittel (106) möglich ist. Als solche Triebbefestigungsmittel (106) kann jede Art von Befestigungen eines Antriebs- bzw. Abtriebsmittels an eine Wellenkupplung verwendet werden. Bei dieser Ausführungsform sind dies beispielsweise Schraubflansche, wie dies in Fig. 3 im Detail dargestellt ist. Erkennbar ist die Ausführung des Triebbefestigungsmittels (106) als Schraubflansch, der insbesondere lösbar mit der jeweils zugeordneten Kupplungsmembran (1) verschraubbar und somit drehmomentübertragend koppelbar ist.

Die Wellenkupplung (100) besteht bei dieser Ausführungsform aus zwei sich gegenüberliegenden Kupplungsmembranen (1), die über ein Ausgleichsmittel (110) miteinander verbunden sind. Dieses Ausgleichsmittel (110) ist optional ein elastisches Ausgleichsmittel, sodass u.a. ein in Fig. 2 dargestellter Winkelversatz und/oder ein (nicht dargestellter) Axialversatz zwischen dem Antriebsmittel (102) und dem Abtriebsmittel (104) ausgeglichen werden kann.

Exemplarisch ist hier dargestellt, dass beim Vorherrschen eines Winkelversatzes die antriebsseitig gebildete Rotationsachse A_{R} zur abtriebsseitig ausgebildeten Rotationsachse (hier dargestellt durch das Bezugszeichen A_{R'} um den Winkel β verschwenkt ist. Ein Achsversatz ist nicht im Detail dargestellt. Er wäre u.a. bei einer Parallelverschiebung der beiden Achsen A_{R}, A_{R'} relativ zueinander gegeben. Kompensiert werden beide Versatze durch die Elastizität des Ausgleichsmittels (110).

Die Figs. 3 und 4 zeigen die Ausführungsform der Wellenkupplung (100), wie sie schematisch in den Figs. 1 und 2 dargestellt ist, im isometrischen Detail. Erkennbar ist hier die optionale Anordnung der zwei Kupplungsmembranen (1), die (siehe insbesondere Fig. 4) über das elastische Ausgleichsmittel (110) miteinander in Kraftkopplung stehen. Dieses elastische Ausgleichsmittel (110) ist über jeweils ein Ausgleichsbefestigungsmittel (108) an der jeweiligen Kupplungsmembran befestigt. Bei dieser Ausführungsform ist eine Schraubverbindung ausgeführt, wobei das Ausgleichsmittel (110) eine Sandwich-Bauweise aus elastischem Mittel (111), beispielsweise ein Gummielement, und einem Tragmittel (113), in dieser Ausführungsform beispielsweise ein Metallblech, besteht. Das Ausgleichsmittel kann als Ringelement ausgeführt sein, sodass es, wie in Fig. 3 dargestellt, im montierten Zustand die Rotationsachse A_{R} bzw. die zueinander versetzt angeordneten Rotationsachsen A_{R'} und A_{AR} umläuft. Im Umfang der Erfindung wird auch für die versetzt zueinander angeordneten Rotationsachsen A_{R} und A_{R'} als es eine Rotationsachse A_{R} Bezug genommen.

Um zu detektieren, welche Drehmomente M durch die Wellenkupplung (100) bzw. die Kupplungsmembranen (1) und die Ausgleichsmittel (110) übertragen werden müssen, sind an der Kupplungsmembran (1) über den Umfang U verteilt Sensormittel (6) angeordnet. Diese Sensormittel wurden bereits im einleitenden Teil näher definiert. Um ein genaues Messergebnis und insbesondere eine Verfälschung durch den zuvor beschriebenen Achsversatz und/oder Winkelversatz zu verhindern, sind an wenigstens einer der in Fig. 3 dargestellten Wellenkupplung (1) bzw. Kupplungsmembran insbesondere im Bereich der Sensormittel (6) Durchbrechung (2) angeordnet.

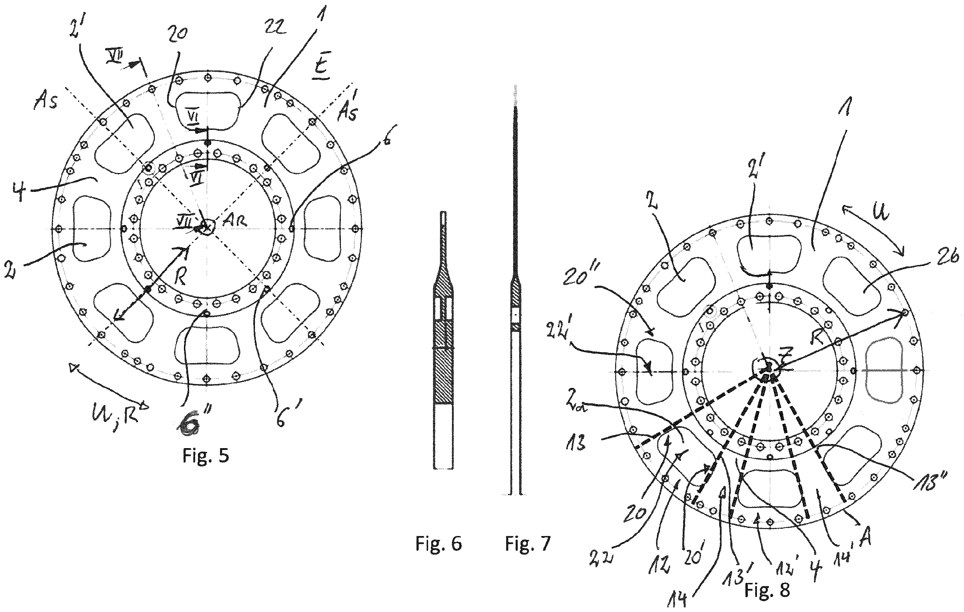

Die Figs. 5 bis 8 zeigen in Detail eine Ausführungsform der Kupplungsmembran (1), wie sie in Figur 3 dargestellt ist, mit besonderer Fokussierung auf die Ausführungsform der dort angeordneten Durchbrechungen (2).

Die Durchbrechungen (2) sind hier in der Kupplungsmembranebene E ausgebildet dargestellt, die durch die Haupterstreckungsebene der Kupplungsmembran (1) gebildet wird. Die Kupplungsmembranebene E ist hier also coplanar zur Papierebene dargestellt. Die Durchbrechungen (2) sind hier, wie insbesondere auch in Fig. 3 dargestellt, als Durchgänge bzw. Löcher ausgeführt.

Wie im Detail in Fig. 8 dargestellt, sind die Durchbrechungen (2) jeweils in Durchbrechungssektoren (12) angeordnet. Diese Durchbrechungssektoren werden beispielsweise durch Radialachsen (13) gebildet, die tangential an den Durchbrechungen (2), insbesondere in voraus- und nachlaufenden Bereichen (20) von einem Zentralbereich Z der Kupplungsmembran (1) radial nach außen zu einem Außenrandbereich A verlaufen. Zwischen diesen Durchbrechungssektoren (12) sind Stegsektoren (14) mit Stegen (4) angeordnet, die die jeweiligen Durchbrechungen (2) voneinander trennen. Wie in den Figs. 5 und 8 dargestellt, sind bei dieser Ausführungsform die Durchbrechungen (2) inselartig in der Kupplungsmembranebene E ausgebildet. In Richtung des Zentralbereiches Z und des Außenrandbereiches A sind die Durchbrechungen (2) ebenfalls von einem Material der Kupplungsmembran (1) umgeben, das optional dem Material und der Ausführung der Stege (4) entspricht. Hier ist beispielsweise die Materialart und/oder die Dicke des Materials identisch.

Wie bereits im einleitenden Teil näher erläutert, ist es denkbar, dass eine Mehrzahl der Durchbrechungen sich in Umfangsrichtung U der Kupplungsmembranlänge erstreckt als in Radialrichtung R der Kupplungsmembran. Dies ist hier dargestellt. Darüber hinaus sind die Durchbrechungen in Bezug auf die in Fig. 5 dargestellten Radialachsen A_{S}, die die jeweiligen Durchbrechungen (2) insbesondere als Symmetrieachse schneiden, symmetrisch ausgebildet. Insbesondere weisen sie beispielsweise in wenigstens einem in Umfangsrichtung U der Kupplungsmembran liegenden voraus- und/oder nachlaufenden Bereich (20) eine größere Radialerstreckung auf als in einem Umfangsbereich U der Kupplungsmembran und in Bezug auf die dem voraus- und/oder nachlaufenden Bereich (20) dazwischenliegenden Zwischenbereich (22).

Dargestellt ist auch, dass bei dieser Ausführungsform beispielsweise jeweils wenigstens zwei Durchbrechungen (hier bezeichnet als 2a, und 2b) sich radial gegenüberliegend angeordnet sind.

Exemplarisch sind bei dieser Ausführungsform acht Durchbrechungen über den Umfang der Kupplungsmembran verteilt angeordnet. Die Anordnung ist hier exemplarisch gleichmäßig, wobei exemplarisch die Durchbrechungen alle identisch ausgebildet sind. Selbiges gilt exemplarisch für die Stege (4).

Wie insbesondere in Fig. 5 dargestellt, sind an der Kupplungsmembran eine Mehrzahl an Sensormitteln (6) angeordnet, um eine Drehmomentmessung an der Kupplungsmembran (1) bzw. der Wellenkupplung (100) vorzunehmen. Erfindungsgemäß sind diese Sensormittel (6) in den in Fig. 8 dargestellten Durchbrechungssektoren (12) ausgebildet. Optional sind eine Mehrzahl der Sensormittel (6), in Radialrichtung R der Kupplungsmembran betrachtet, in Bezug auf die Rotationsachse A_{R} (siehe auch Fig. 1 und Fig. 3) weiter innen angeordnet als die Durchbrechungen (2). Optional sind die Sensormittel (6) auf einer Radialachse angeordnet, die die Durchbrechungen schneidet und insbesondere eine Symmetrieachse bzw. Radialachse As für die Durchbrechungen bildet.

Es ist denkbar, die Sensormittel in einem Ringbereich anzuordnen, der auf dem Kupplungselement ausgebildet ist. Dieser Ringbereich kann eine größere Dicke aufweisen als die Kupplungsmembran (1), betrachtet in Richtung der Rotationsachse. Bei dieser Ausführungsform sind beispielsweise Sensoraufnahmen vorgesehen, in die Sensor- und insbesondere Dehnungsmittel eingesetzt sind bzw. werden können.

Grundsätzlich wird auf alle zuvor und insbesondere im einleitenden Teil beschriebenen Ausführungsformen verwiesen, die bei dem hier dargestellten Ausführungsbeispiel für sich alleine, aber auch in Kombination mit anderen verwirklicht sein können.

### Bezugszeichenliste

- 1: Kupplungsmembran
- 2: Durchbrechung
- 4: Steg
- 6: Sensormittel
- 12: Durchbrechungssektor
- 14: Stegsektor
- 20: Voraus- und nachlaufender Bereich
- 22: Zwischenbereich
- 100: Wellenkupplung
- 102: Antriebsmittel
- 104: Abtriebsmittel
- 106: Triebbefestigungsmittel
- 108: Ausgleichsbefestigungsmittel
- 110: Ausgleichsmittel
- 112: Antriebswelle
- 113: Tragmittel
- 114: Abtriebswelle
- A: Außenrandbereich
- Z: Zentralbereich
- AN: Antriebsseite
- AB: Abtriebsseite
- As: Radialachse
- A_{R}: Rotationsachse
- M: Drehmoment
- R: Radialrichtung
- U: Umfangsrichtung
- E: Kupplungsmembranebene

## Patentansprüche

1. Kupplungsmembran für eine elastische Wellenkupplung (100), zur achs- und/oder winkelversatzkompensierenden und drehmomentübertragenden Kopplung eines Antriebsmittels (102), umfassend beispielsweiße eine Antriebswelle (104), mit einem entlang einer Rotationsachse A_{R} nachgeschaltetem Abtriebsmittel (112), umfassend beispielsweise eine Abtriebswelle (114),
wobei die Kupplungsmembran (1) um die Rotationsachse A_{R} rotierend drehmomentübertragend mit dem Antriebsmittel (114) und/oder dem Abtriebsmittel (112) verbindbar ist, wobei die Kupplungsmembran (1) eine Mehrzahl in Umfangsrichtung U verteilter Durchbrechungen (2) aufweist, die durch resultierende radial verlaufende Stege (4) voneinander getrennt sind, wobei die Durchbrechungen (2) in, in Radialrichtung R verlaufenden Durchbrechungssektoren (12), und die Stege (4) in, in Radialrichtung R verlaufenden Stegsektoren (14) in der Kupplungsmembran (1) ausgebildet sind, weiter umfassend
eine Mehrzahl an Sensormitteln (6), um eine Dehnungs- und/oder Spannungsmessung an der Kupplungsmembran (1) derart auszuführen, dass daraus ein Rückschluss auf ein an der Wellenkupplung (100) anliegendes Drehmoment M möglich ist, wobei diese Mehrzahl der Sensormitteln (6) in den Durchbrechungssektoren (12) auf der Kupplungsmembran (1) angeordnet ist,
**dadurch gekennzeichnet, dass**
diese Mehrzahl der Sensormittel (6), jeweils angeordnet in einem Durchbrechungssektor, in Radialrichtung R der Kupplungsmembran (1) betrachtet, in Bezug auf die Rotationsachse A_{R} weiter innen angeordnet ist als die Durchbrechungen (2).

2. Kupplungsmembran nach Anspruch 1,
**dadurch gekennzeichnet, dass**
die Durchbrechungen (2) in der Kupplungsmembranebene E der Kupplungsmembran (1) ausgebildet sind.

3. Kupplungsmembran nach Anspruch 1 oder 2,
**dadurch gekennzeichnet, dass**
eine Mehrzahl der Sensormittel (6) an der Kupplungsmembran (1) Dehnungsmessstreifenaufnahmen (7), zur Aufnahme von Dehnungsmesstreifen, und/oder Dehnungsmesstreifen (8) aufweist.

4. Kupplungsmembran nach einem der vorhergehenden Ansprüche,
**dadurch gekennzeichnet, dass**
die Durchbrechungssektoren (12) und die Stegsektoren (14) in Umfangsrichtung U intermittierend in der Kupplungsmembran (1) ausgebildet sind.

5. Kupplungsmembran nach einem der vorhergehenden Ansprüche,
**dadurch gekennzeichnet, dass**
die Kupplungsmembran (1) in einem Zentralbereich Z ein Triebbefestigungsmittel (106), insbesondere einen Flansch aufweist, mit der sie am Antriebsmittels (102) oder am Abtriebsmittel (14) befestigbar ist und/oder in einem in Radialrichtung der Kupplungsmembran (1) weiter außen liegendem Außenrandbereich A ein Ausgleichsbefestigungsmittel (108) aufweist, mit der sie an einem Ausgleichmittel (110), beispielsweise einem Gummi oder dergleichen elastischen Element befestigbar ist, oder ein solches Ausgleichmittel (110) aufweist.

6. Kupplungsmembran nach einem der vorhergehenden Ansprüche,
**dadurch gekennzeichnet, dass**
eine Mehrzahl der Durchbrechungen (2) sich in Umfangsrichtung U der Kupplungsmembran (1) länger erstrecket als in Radialrichtung R der Kupplungsmembran (1).

7. Kupplungsmembran nach einem der vorhergehenden Ansprüche,
**dadurch gekennzeichnet, dass**
eine Mehrzahl der Durchbrechungen (2) in wenigstens einem in Umfangsrichtung U der Kupplungsmembran (1) liegenden voraus- und/oder nachlaufendem Bereich (20) eine größere Radialerstreckung aufweist, als in einem in Umfangsrichtung U der Kupplungsmembran (1) und in Bezug auf die voraus- und/oder nachlaufenden Bereiche (20) zwischenliegenden Zwischenbereich (22).

8. Kupplungsmembran nach einem der vorhergehenden Ansprüche,
**dadurch gekennzeichnet, dass**
eine Mehrzahl der Durchbrechungen (2) in einer Draufsicht auf die Kupplungsmembranebene E eine Schmetterlingsform aufweisen.

9. Kupplungsmembran nach einem der vorhergehenden Ansprüche,
**dadurch gekennzeichnet, dass**
eine Mehrzahl der Durchbrechungen (2) in Bezug auf eine die jeweilige Durchbrechung (2) schneidende Radialachse As der Kupplungsmembran (1) symmetrisch ausgebildet ist.

10. Kupplungsmembran nach einem der vorhergehenden Ansprüche,
**dadurch gekennzeichnet, dass**
die Durchbrechungen (2) über den Umfang der Kupplungsmembran (1) gleichmäßige verteilt angeordnet sind.

11. Kupplungsmembran nach einem der vorhergehenden Ansprüche,
**dadurch gekennzeichnet, dass**
jeweils zwei Durchbrechungen (2) sich radial gegenüberliegend angeordnet sind.

12. Wellenkupplung (100) zur drehmomentübertragenden Kopplung eines Antriebsmittels (102), mit beispielswelle einer Antriebswelle (112), mit einem entlang einer Rotationsachse A_{R} nachgeschaltetem Abtriebsmittel (104), mit beispielsweise einer Abtriebswelle (114), umfassend
wenigstens zwei sich wenigstens teilweise gegenüberliegende erste und zweite Kupplungsmembranen (1), die über ein insbesondere elastisches Ausgleichsmittel (110) miteinander in drehmomentübertragender Kraftkopplung stehen, wobei die erste Kupplungsmembran (1) drehmomentübertragend mit dem Antriebsmittel (102) und die zweite Kupplungsmembran (1') drehmomentübertragend mit dem Abtriebsmittel (104) verbindbar ist, oder umgekehrt,
wobei wenigstens eine Kupplungsmembran (1) eine Kupplungsmembran (1) nach einem der vorhergehenden Ansprüche ist.

## Claims

1. Clutch diaphragm for an elastic shaft clutch (100), for coupling a drive means (102) in a manner which compensates for an axial and/or angular offset and transmits torque, comprising, for example, a drive shaft (104), with an output means (112) connected downstream along an axis of rotation A_{R}, comprising, for example, an output shaft (114),
wherein it is possible to connect, in a torque-transmitting manner, the clutch diaphragm (1) to the drive means (114) and/or the output means (112) so as to rotate about the axis of rotation A_{R}, wherein the clutch diaphragm (1) has a plurality of openings (2) which are distributed in a direction of circumference U and are separated from one another by resulting radially extending webs (4), the openings (2) are formed in opening sectors (12) extending in the radial direction R, and the webs (4) are formed in web sectors (14) in extending in the radial direction R in the clutch diaphragm (1), further comprising
a plurality of sensor means (6) in order to carry out a strain measurement and/or tension measurement on the clutch diaphragm (1) such that a conclusion regarding a torque M applied to the shaft clutch (100) is possible, wherein said plurality of sensor means (6) is arranged in the opening sectors (12) on the clutch diaphragm (1),
**characterised in that**,
when observed in the radial direction R of the clutch diaphragm (1), said plurality of sensor means (6), each being arranged in an opening sector, is arranged further inwards than the openings (2) relative to the axis of rotation A_{R}.

2. Clutch diaphragm according to claim 1,
**characterised in that**
the openings (2) are in the clutch diaphragm plane E of the clutch diaphragm (1).

3. Clutch diaphragm according to claim 1 or 2,
**characterised in that**
a plurality of sensor means (6) on the clutch diaphragm (1) has strain measuring strip receivers (7), for receiving strain measuring strips, and/or strain measuring strips (8).

4. Clutch diaphragm according to any of the preceding claims,
**characterised in that**
the opening sectors (12) and the web sectors (14) are intermittently formed in the clutch diaphragm (1) in the direction of circumference U.

5. Clutch diaphragm according to any of the preceding claims,
**characterised in that**
the clutch diaphragm (1) has, in a central region Z, a drive fastening means (106), in particular a flange, by means of which said diaphragm can be fastened to the drive means (102) or to the output means (14) and/or has, in an outer peripheral region A located further outwards in a radial direction of the clutch diaphragm (1), a compensating fastening means (108) by means of which said diaphragm can be fastened to a compensating means (110), for example a rubber or similar elastic element, or has a compensating means of this kind (110).

6. Clutch diaphragm according to any of the preceding claims,
**characterised in that**
a plurality of openings (2) extends further in the direction of circumference U of the clutch diaphragm (1) than in the radial direction R of the clutch diaphragm (1).

7. Clutch diaphragm according to any of the preceding claims,
**characterised in that**
a plurality of openings (2) has, in at least one region (20) running ahead or behind in the direction of circumference U of the clutch diaphragm (1), a greater radial extension than in an intermediate region (22) interposed in the direction of circumference U of the clutch diaphragm (1) and in relation to the regions (20) running ahead and/or behind.

8. Clutch diaphragm according to any of the preceding claims,
**characterised in that**
a plurality of openings (2) have a butterfly shape in a plan view of the clutch diaphragm plane E.

9. Clutch diaphragm according to any of the preceding claims,
**characterised in that**
a plurality of openings (2) is symmetrical in relation to a radial axis A_{S}, which intersects the respective opening (2), of the clutch diaphragm (1).

10. Clutch diaphragm according to any of the preceding claims,
**characterised in that**
the openings (2) are arranged in an equally distributed manner over the circumference of the clutch diaphragm (1).

11. Clutch diaphragm according to any of the preceding claims,
**characterised in that**
in each case, two openings (2) are arranged radially opposite one another.

12. Shaft clutch (100) for coupling in a torque-transmitting manner a drive means (102), with, for example, a drive shaft (112), with an output means (104) connected downstream along an axis of rotation A_{R}, with, for example an output shaft (114), comprising
at least two first and second clutch diaphragms (1) at least partially opposite one another which are in a torque-transmitting power coupling with one another by means of an, in particular elastic, compensating means (110), wherein it is possible to connect the first clutch diaphragm (1) to the drive means (102) in a torque-transmitting manner and the second clutch diaphragm (1') to the output means (104) in a torque-transmitting manner, or vice versa,
wherein at least one clutch diaphragm (1) is a clutch diaphragm (1) according to any of the preceding claims.

## Revendications

1. Membrane d'accouplement destinée à un accouplement d'arbres élastique (100), en vue de l'accouplement, avec compensation de décalage axial et/ou angulaire et avec transmission de couple, d'un moyen d'entraînement (102), comportant par exemple un arbre menant (104), avec un moyen de sortie (112) monté à la suite, le long d'un axe de rotation A_{R}, et comportant par exemple un arbre mené (114),
la membrane d'accouplement (1) pouvant être reliée au moyen d'entraînement (114) et/ou au moyen de sortie (112) en tournant autour de l'axe de rotation A_{R} et en transmettant un couple, la membrane d'accouplement (1) présentant une pluralité de perforations (2) qui sont réparties dans la direction périphérique U et sont séparées les unes des autres par des entretoises (4) radiales résultantes, les perforations (2) étant réalisées dans des secteurs à perforations (12) s'étendant dans la direction radiale R, et les entretoises (4) étant formées dans des secteurs à entretoises (14) s'étendant dans la direction radiale R, dans la membrane d'accouplement (1), comprenant en outre
une pluralité de moyens formant capteurs (6) destinés à effectuer une mesure de dilatation et/ou de tension sur la membrane d'accouplement (1), de manière à permettre une déduction concernant un couple M appliqué à l'accouplement d'arbres (100), ladite pluralité de moyens formant capteurs (6) étant disposée dans les secteurs à perforations (12) sur la membrane d'accouplement (1),
**caractérisée en ce que**
ladite pluralité de moyens capteurs (6), qui sont chacun disposés dans un secteur à perforations, sont placés plus à l'intérieur par rapport à l'axe de rotation A_{R} que les perforations (2), vu dans la direction radiale R de la membrane d'accouplement (1).

2. Membrane d'accouplement selon la revendication 1, **caractérisée en ce que** les perforations (2) sont réalisées dans le plan de membrane d'accouplement E de la membrane d'accouplement (1).

3. Membrane d'accouplement selon la revendication 1 ou 2, **caractérisée en ce que** plusieurs des moyens capteurs (6) sur la membrane d'accouplement (1) présentent des logements pour jauges de dilatation (7), destinés à accueillir des jauges de dilatation, et/ou des jauges de dilatation (8).

4. Membrane d'accouplement selon l'une des revendications précédentes, **caractérisée en ce que** les secteurs à perforations (12) et les secteurs à entretoises (14) sont réalisés de façon intermittente dans la direction périphérique U dans la membrane d'accouplement (1).

5. Membrane d'accouplement selon l'une des revendications précédentes, **caractérisée en ce que** la membrane d'accouplement (1) présente, dans une zone centrale Z, un moyen de fixation d'entraînement (106), notamment une bride, par lequel elle peut être fixée au moyen d'entraînement (102) ou au moyen de sortie (14), et/ou présente, dans une zone de bordure extérieure A située plus à l'extérieur dans la direction radiale de la membrane d'accouplement (1), un moyen de fixation de compensation (108) par lequel elle peut être fixée à un moyen de compensation (110), par exemple un caoutchouc ou un élément élastique analogue, ou présente un moyen de compensation (110) de ce type.

6. Membrane d'accouplement selon l'une des revendications précédentes, **caractérisée en ce qu'**une pluralité des perforations (2) s'étend sur une plus grande longueur dans la direction périphérique U de la membrane d'accouplement (1) que dans la direction radiale R de la membrane d'accouplement (1).

7. Membrane d'accouplement selon l'une des revendications précédentes, **caractérisée en ce qu'**une pluralité des perforations (2) présente, dans au moins une zone (20) avant et/ou arrière située dans la direction périphérique U de la membrane d'accouplement (1), une dimension radiale qui est plus grande que celle d'une zone intermédiaire (22) située dans la direction périphérique U de la membrane d'accouplement (1) et intercalée par rapport aux zones (20) avant et/ou arrière.

8. Membrane d'accouplement selon l'une des revendications précédentes, **caractérisée en ce qu'**une pluralité des perforations (2) présente la forme d'un papillon, prise dans une vue de dessus du plan de membrane d'accouplement E.

9. Membrane d'accouplement selon l'une des revendications précédentes, **caractérisée en ce qu'**une pluralité des perforations (2) est réalisée de façon symétrique par rapport à un axe radial Aₛ de la membrane d'accouplement (1) qui coupe la perforation (2) concernée.

10. Membrane d'accouplement selon l'une des revendications précédentes, **caractérisée en ce que** les perforations (2) sont disposées en étant uniformément réparties sur la circonférence de la membrane d'accouplement (1).

11. Membrane d'accouplement selon l'une des revendications précédentes, **caractérisée en ce que** respectivement deux perforations (2) sont disposées de manière à être diamétralement opposées l'une à l'autre.

12. Accouplement d'arbres (100) destiné à l'accouplement à transmission de couple d'un moyen d'entraînement (102), comportant par exemple un arbre d'entraînement (112), avec un moyen de sortie (104), comportant par exemple un arbre mené (114), monté à la suite le long d'un axe de rotation A_{R}, comprenant
au moins deux première et deuxième membranes d'accouplement (1) qui se font face au moins en partie et se trouvent dans un accouplement de force réciproque à transmission de couple, par l'intermédiaire d'un moyen de compensation (110), notamment élastique, la première membrane d'accouplement (1) pouvant être reliée au moyen d'entraînement (102), de manière à transmettre le couple, et la deuxième membrane d'accouplement (1') pouvant être reliée au moyen de sortie (104), de manière à transmettre le couple, ou inversement,
au moins une membrane d'accouplement (1) étant une membrane d'accouplement (1) selon l'une des revendications précédentes.
